# EUROPÄISCHE PATENTSCHRIFT

(11) **EP 0 812 712 B1**
(45) Veröffentlichungstag und Bekanntmachung des Hinweises auf die Patenterteilung: **07.11.2001**
(21) Anmeldenummer: 97106882.0
(22) Anmeldetag: 25.04.1997
(51) Int. Cl.: B60G 25/00, B60G 21/05, B62D 21/00

(54) **Fahrschemel zur Verbindung des Radführungselementes eines Fahrzeuges mit dessen Aufbau**
Subframe for connecting the wheel guiding elements of a vehicle with its body
Cadre auxiliaire pour connecter les éléments de guidage de roue d'un véhicule avec sa carrosserie

(30) Priorität: 15.06.1996 DE 19623997
(43) Veröffentlichungstag der Anmeldung: 17.12.1997
(73) Patentinhaber: DaimlerChrysler AG, 70567 Stuttgart (DE)
(72) Erfinder: Kleinschmit, Einhard, 73732 Esslingen (DE); Reimold, Harald, 75031 Eppingen (DE); Tattermusch, Peter, 73732 Esslingen (DE)

(56) Entgegenhaltungen:
- EP-A- 0 324 663
- EP-A- 0 496 949
- US-A- 3 362 498
- US-A- 3 913 696
- US-A- 4 964 651
- PATENT ABSTRACTS OF JAPAN vol. 017, no. 279 (M-1419), 28.Mai 1993 & JP 05 008648 A (SUZUKI MOTOR CORP), 19.Januar 1993,
- PATENT ABSTRACTS OF JAPAN vol. 013, no. 094 (M-804), 6.März 1989 & JP 63 287616 A (MAZDA MOTOR CORP), 24.November 1988,
- PATENT ABSTRACTS OF JAPAN vol. 011, no. 302 (M-629), 2.Oktober 1987 & JP 62 094406 A (TOYOTA MOTOR CORP), 30.April 1987,
- PATENT ABSTRACTS OF JAPAN vol. 096, no. 007, 31.Juli 1996 & JP 08 080866 A (NISSAN MOTOR CO LTD), 26.März 1996,
- PATENT ABSTRACTS OF JAPAN vol. 096, no. 006, 28.Juni 1996 & JP 08 034248 A (HONDA MOTOR CO LTD), 6.Februar 1996,
- PATENT ABSTRACTS OF JAPAN vol. 095, no. 001, 28.Februar 1995 & JP 06 286642 A (HONDA MOTOR CO LTD), 11.Oktober 1994,

## Beschreibung

Die Erfindung betrifft einen Fahrschemel zur Verbindung der Radführungselemente eines Fahrzeuges mit dessen Aufbau nach dem Oberbegriff des Patentanspruchs 1. Ein solcher Fahrschemel kann insbesondere an einer angetriebenen Hinterachse vorgesehen sein und dort das Achsgetriebegehäuse lagern.

Eine derartige Einrichtung ist aus EP 0 324 663 A1 bekannt.

Bei einer gattungsähnlichen Einrichtung nach EP 0 496 949 sind die Längsträger durch einerseits einen starr an diesem befestigten Querträger und andererseits gegenüber diesem beabstandeten, zu den Radführungselementen führenden Stabilisator miteinander verbunden. Eine karosserieseitig elastische Lagerung der Längsträger ist dort nicht vorgesehen.

Bei einem gattungsgemäßen Fahrschemel beschäftigt sich die Erfindung mit dem Problem, das Eigenlenkverhalten der mit ihm zusammenwirkenden Räder positiv zu beeinflussen.

Eine Lösung dieses Problems zeigt ein nach den kennzeichnenden Merkmalen des Patentanspruchs 1 ausgebildeter gattungsgemäßer Fahrschemel auf.

Die Erfindung beruht auf dem Gedanken, während des Fahrbetriebes auf die Räder einwirkende Kräfte derart in den Fahrschemel einzuleiten, daß eine geringe definierte Eigenbewegung der Längsträger erzielt wird. Eine solche Eigenbewegung ist einerseits durch die elastische Anbindung des Fahrschemels an der Fahrzeugkarosserie (Aufbau) und andererseits durch die über die erfindungsgemäßen Lager erfolgende Verbindung der Längs- und Querträger untereinander möglich.

Handelt es sich beispielsweise um einen Hinterachs-Fahrschemel mit Lagerung eines Hinter-Achsgetriebegehäuses und besitzt der Fahrschemel dabei einen starr mit den Längsträgern verbundenen hinteren Querträger bei einem elastisch an die beiden Längsträger angebundenen vorderen Querträger, so bewirkt eine solche Ausbildung des Fahrschemels bei der Kurvenfahrt eines Fahrzeuges infolge der von den Rädern auf die Längsträger übertragenen Kräfte ein Untersteuern des Fahrzeuges.

Für die Erzielung eines solchen Fahrverhaltens bei einem Vorderachs-Fahrschemel ist die Art der Anbindung des vorderen und hinteren Querträgers an die Längsträger zu vertauschen. Das heißt der vordere Querträger ist fest an die Längsträger und der hintere Querträger elastisch an diese anzubinden.

Die elastischen Lager zwischen den Quer- und Längsträgern sowie zwischen den Längsträgern und der Fahrzeugkarosserie können in Fahrzeuglängs- und Querrichtung unterschiedliche Elastizitäten aufweisen. Dabei kann die Elastizität in Fahrzeuglängsrichtung insbesondere größer als in Fahrzeugquerrichtung sein.

Bei einer erfindungsgemäßen Einrichtung wird eine hohe Dämmung mit Bezug auf von beispielsweise einem Achsgetriebe und einer Antriebsgelenkwelle ausgehende Anregungen, die von der Fahrzeugkarosserie aufzunehmen sind, erreicht. Des weiteren ist eine wirksame akustische und schwingungsmäßige Abkopplung zwischen der Radaufhängung an der linken und rechten Hälfte der Fahrzeugachse erreichbar.

Durch die elastische Anbindung eines Querträgers an die Längsträger des Fahrschemels ist zumindest eine starre Anbindung eines Achsgetriebegehäuses an diesem Querträger möglich.

Für die Längs- und Querträger des erfindungsgemäßen Fahrschemels können unterschiedliche Materialien eingesetzt werden, wobei auch insbesondere die beiden Querträger aus unterschiedlichem Material bestehen können.

Durch eine Trennbarkeit zwischen dem elastisch angelenkten Querträger und den Längsträgern ist eine vereinfachte Montage eines Achsgetriebes möglich, indem das Achsgetriebe bereits an den elastisch anzulenkenden Querträger vormontiert an den Längsträgern befestigbar ist.

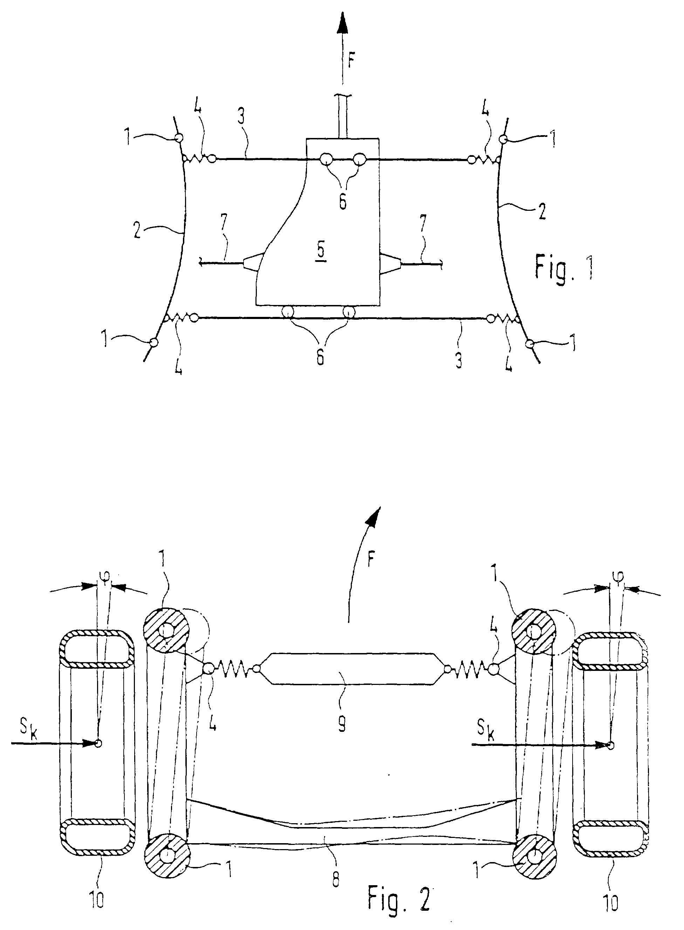

Ausführungsbeispiele der Erfindung (ausgenommen die Einrichtung nach Fig. 1, die lediglich zum Verständnis des Zusammenwirkens der einzelnen Fahrschemel-Bauteile gezeichnet ist) sind mit Bezug auf die Hinterachse eines Fahrzeuges schematisch in der Zeichnung in jeweils einer Ansicht von oben in Richtung der Fahrzeughochachse dargestellt.

Es zeigen
- Fig. 1: einen Fahrschemel mit daran gelagertem Hinterachsgetriebe und elastisch an die Längsträger angebundenen Längs- und Querträgern (keine Ausführungsform der Erfindung),
- Fig. 2: einen Fahrschemel mit einem an die Längsträger starr angebundenen hinteren und einem elastisch angebundenen vorderen Querträger mit angedeuteter Verformung unter Seitenkraft bei einer Kurvenfahrt,
- Fig. 3: einen nach Fig. 2 aufgebauten Fahrschemel mit angedeuteter Verformung unter unterschiedlicher Bremskraft an beiden angelenkten Rädern,
- Fig. 4: einen nach Fig. 2 aufgebauten Fahrschemel mit angedeuteter Verformung unter Antriebskraft der an ihn angelenkten Räder.

Ein an einer nicht dargestellten Fahrzeugkarosserie über elastische Lager 1 befestigbarer Fahrschemel besteht aus einem Paar Längsträger 2 sowie einem Paar Querträger 3. Die Längs- und Querträger 2 bzw. 3 sind über elastische Lager 4 zu einem Viereck miteinander verbunden.

In Fig. 1 deutet ein Pfeil F die Fahrtrichtung des Fahrzeuges an, an dem der Fahrschemel im Bereich der Hinterachse zu befestigen ist.

An den Querträgern 3 ist bei diesem Ausführungsbeispiel ein Achsgetriebegehäuse 5 über Lager 6 befestigt. Diese Lager 6 können starr oder elastisch sein.

Von dem Achsgetriebegehäuse 5 zweigen Gelenkwellen 7 zum Antrieb der an der Achse des Achsgetriebegehäuses 5 zu befestigenden Fahrzeugräder ab. Die Lenker der Aufhängung dieser Räder sind jeweils an den Längsträgern 2 angelenkt. Dadurch werden beim Fahrbetrieb auf die Fahrzeugräder einwirkende Kräfte auf die Längsträger 2 übertragen, wodurch diese im Rahmen der elastischen Aufhängung an der Fahrzeugkarosserie bzw. elastischen Verbindung mit den Querträgern 3 Relativbewegungen gegenüber der Fahrzeugkarosserie (Aufbau) und den Querträgern 3 ausführen können. Hierdurch läßt sich das Verhalten der Fahrzeugräder, insbesondere deren Eigenlenkverhalten, bei in diese im Fahrbetrieb einwirkenden Betriebskräften gezielt in Richtung einer Fahrkomforterhöhung beeinflussen.

Bei den erfindungsgemäßen Fahrschemel-Ausführungen nach den Fig. 2 bis 4, die sich jeweils auf angetriebene Hinterachsen beziehen, ist der hintere Querträger 8 jeweils mit den Längsträgern 2 starr und der vordere Querträger 9 mit diesen jeweils elastisch verbunden.

Fig. 2 zeigt einen bei Kurvenfahrt des Fahrzeuges in Richtung des Pfeiles F durch von den Rädern 10 ausgehende Seitenkräfte S_{K} verformten Fahrschemel. Die Verformung ist dabei durch strichpunktierte Linien angedeutet. Bei den Rädern 10 gibt der jeweils eingetragene Winkel ϕ die durch die Verformung des Fahrschemels eintretende Schrägstellung in Richtung untersteuernd wirkender Vorspuränderung an.

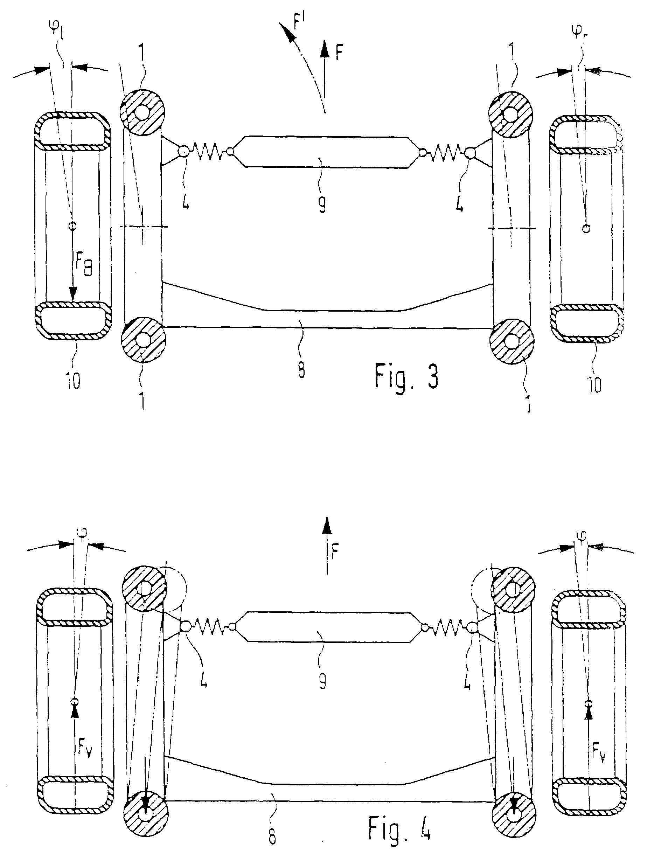

Bei dem Ausführungsbeispiel nach Fig. 3 wirken auf die beiden Räder 10 der Hinterachse unterschiedliche Bremskräfte durch beispielsweise unterschiedliche Haftung der beiden Räder 10 auf der Fahrbahn. Bei einer auf das in der Zeichnung links liegende Rad 10 einwirkenden Bremskraft, die größer als diejenige ist, die auf das rechte Rad 10 einwirkt, führt dies zu einer Kursabweichung in Richtung des gestrichelten Pfeiles F' . Durch die größere auf das rechte Rad 10 wirkende Bremskraft nimmt das linke Rad 10 eine größere Schrägstellung durch die unter der Bremskraft erfolgende Fahrschemelverformung ein als das rechts Rad 10, das heißt der Schrägstellungswinkel ϕ_{L} ist größer als ϕᵣ. Dadurch geht das linke Rad 10 mit Bezug auf die beim Bremsen eintretende Kursabweichung F' in Nachspur und wirkt damit übersteuernd in Richtung einen Kurskorrektur auf den Ausgangskurs F. Durch die Fahrschemel-Verformung wird auf diese Weise ein vorteilhaftes kurskorrigierendes Bigenlenkverhalten der Hinterachse erreicht.

Der Fahrschemel nach Fig. 4 steht unter dem Einfluß einer von den Rädern 10 jeweils gleichmäßig ausgehenden Antriebskraft. Dabei bewirkt die von den Rädern 10 ausgehende Antriebskraft Fᵥ durch entsprechende Verformung des Fahrschemels eine Vorspurzunahme um einen jeweils gleichen Winkel ϕ an beiden Rädern. Diese Vorspuränderung überlagert sich derjenigen aus der Radführung zwischen Rad und nicht dargestelltem Achsträger.

## Patentansprüche

1. Fahrschemel zur Verbindung der Radführungselemente einer Fahrzeugsachse eines Fahrzeuges mit dessen Karosserie bei dem
- zwei etwa parallel zur Fahrzeuglängsachse beabstandet zueinander verlaufende Längsträger (2) karosserieseitig elastisch gelagert sind,
- an die Längsträger (2) die Radlenker der Fahrzeugachse angelenkt sind,
**gekennzeichnet durch die Merkmale**
- mit den beiden Längsträgern (2) sind voneinander beabstandet zwei Querträger (3) verbunden,
- von den beiden Querträgern sind jeweils an deren Enden der eine starr und der andere über elastische Lager (4) an die beiden Längsträger (2) angebunden.

2. Fahrschemel nach Anspruch 1,
**dadurch gekennzeichnet,**
**daß** die elastischen, die Quer- und Längsträger (3 bzw. 2) verbindenenden Lager (4) in Längs- und Querrichtung des Fahrzeuges unterschiedliche Elastizitäten aufweisen.

3. Fahrschemel nach Anspruch 2,
**dadurch gekennzeichnet,**
**daß** die Elastizität der elastischen Lager (4) in Fahrzeuglängsrichtung größer als quer zu dieser Richtung ist.

## Claims

1. Sub-frame for joining the wheel control elements of a vehicle axle of a motor vehicle to the bodywork thereof, in which
- two longitudinal members (2) spaced at a distance apart from one another extending more or less parallel with the vehicle longitudinal axis are elastically mounted on the bodywork side,
- the wheel steering links are coupled with the longitudinal members (2),
**characterised in that**
- two transverse members (3) spaced at a distance apart from one another are joined to the two longitudinal members (2),
- the two transverse members are coupled by their ends with the two longitudinal members (2), one rigidly and the other by elastic bearings (4).

2. Sub-frame as claimed in claim 1,
**characterised in that**
the elastic bearings (4) coupling the transverse and longitudinal members (3 and 2) have differing elasticities in the longitudinal and transverse directions of the vehicle.

3. Sub-frame as claimed in claim 2,
**characterised in that**
the elasticity of the elastic bearings (4) is greater in the vehicle longitudinal direction than it is transversely to this direction.

## Revendications

1. Faux-châssis destiné à la liaison des éléments de guidage de roue d'un essieu d'un véhicule avec sa carrosserie, dans lequel :
- deux longerons (2) disposés de façon à s'étendre en écartement l'un de l'autre et approximativement parallèlement à l'axe longitudinal du véhicule sont montés de façon élastique du côté de la carrosserie, et
- les bras de l'essieu sont articulés sur les longerons (2),
**caractérisé par** les éléments suivants :
- deux traverses (3) écartées l'une de l'autre sont reliées aux deux longerons (2), et
- parmi les deux traverses, et à leurs extrémités respectives, l'une est raccordée de façon rigide aux deux longerons (2), et l'autre est raccordée par l'intermédiaire de paliers élastiques (4) aux deux longerons (12).

2. Faux-châssis selon la revendication 1,
**caractérisé en ce que** les paliers (4) élastiques qui relient les traverses et les longerons (3 ; 2) présentent des élasticités différentes dans la direction longitudinale et dans la direction transversale du véhicule.

3. Faux-châssis selon la revendication 2,
**caractérisé en ce que** l'élasticité des paliers élastiques (4) est supérieure en direction longitudinale du véhicule à celle perpendiculairement à cette direction.
